# EUROPEAN PATENT APPLICATION

(11) **EP 2 693 739 A1**
(43) Date of publication of application: **05.02.2014**
(21) Application number: 12178899.6
(22) Date of filing: 01.08.2012
(51) Int. Cl.: H04N 5/32, H04N 5/243

(54) **Electronic variable gain for x-ray detector**

(71) Applicant: Agilent Technologies, Inc., Santa Clara, California 95051 (US)
(72) Inventor: Kucharczyk, Damian, Loveland, CO Colorado 80537-7599 (US)
(74) Representative: Dilg, Haeusler, Schindelmann Patentanwaltsgesellschaft mbH

(57) **Abstract**

An electronic circuit (150) for processing electronic measurement data measured by an X-ray detector array (110) being configured for detecting X-rays and having a plurality of detector pixels (102) generating the electronic measurement data in response to X-rays propagating onto the detector array (110), the electronic circuit (150) comprising a measurement data receiving interface (152) configured for receiving the electronic measurement data from the detector pixels (102) as analog signals, an analog gain adjustment unit (154) configured for manipulating the analog signals in accordance with an adjustable analog gain value, and a processor (156, 166) for processing the electronic measurement data after the manipulation.

## Description

### BACKGROUND ART

The present invention relates to an electronic circuit for processing measurement data, an X-ray detector for detecting X-rays, an X-ray analysis apparatus for analyzing a sample by X-ray irradiation, a method of processing measurement data, and a software program or product.

An X-ray tube is a vacuum tube that produces X-rays. X-rays are part of the electromagnetic spectrum with wavelengths shorter than ultraviolet light. X-ray tubes are used in many fields such as X-ray crystallography, medical devices, airport luggage scanners, and for industrial inspection.

An X-ray tube comprises a cathode, which emits electrons into vacuum and an anode to collect the electrons, thus establishing an electron beam. A high voltage power source is connected across cathode and anode to accelerate the electrons. Electrons from the cathode collide with the anode material so that a part of the energy generated is emitted as X-rays. The X-ray beam may then be shaped by passing an X-ray optics and subsequently a collimator.

The X-ray beam may then be directed to a sample, for instance in form of a crystal, for performing an X-ray crystallographic analysis. X-ray crystallography is a method of determining the arrangement of atoms within a crystal, in which a beam of X-rays strikes a crystal and causes the beam of X-rays to spread into many specific directions. From the angles and intensities of these diffracted beams, it is possible to calculate a three-dimensional picture of the density of electrons within the crystal. From this electron density, the mean positions of the atoms in the crystal can be determined.

The scattered X-rays propagate from the sample to an X-ray detector. Here, the X-rays may be converted into optical photons by a scintillator. The optical photons may then be detected with spatial resolution by a pixellated array detector (for example a CCD or CMOS detector) and may hereby be converted into electronic measurement signals. The detector will then forward the electronic measurement signals to an electric circuit for signal processing.

Evaluation of the electronic measurement signals of an X-ray experiment is complex. In many cases, such as in case of protein crystallography, the signal amplitudes are very small. Moreover, disturbing effects such as background noise or electronic artifacts may further reduce accuracy of evaluation.

Hence, there are limitations with regard to the obtainable accuracy when evaluating X-ray measurement data.

### DISCLOSURE

It is an object of the invention to process electronic measurement signals of an X-ray experiment with high accuracy. The object is solved by the independent claims. Further embodiments are shown by the dependent claims.

According to an exemplary embodiment of the present invention, an electronic circuit (such as an integrated circuit) for processing electronic measurement data measured by an X-ray detector array being configured for detecting X-rays and having a plurality of detector pixels generating the electronic measurement data in response to X-rays propagating onto the detector array is provided, the electronic circuit comprising a measurement data receiving interface configured for receiving the electronic measurement data from the detector pixels as analog signals, an analog gain adjustment unit configured for manipulating the analog signals in accordance with an adjustable analog gain value (particularly configured for multiplying the analog signals with a factor which is called the analog gain value, wherein this factor is not unchangeably fixed but can be freely changed or set to a desired value), and a processor for processing the electronic measurement data after the manipulation.

According to another exemplary embodiment, an X-ray detector is provided, wherein the X-ray detector comprises an X-ray detector array configured for detecting X-rays and having a plurality of detector pixels generating electronic measurement data as analog signals in response to X-rays propagating onto the detector array, and an electronic circuit having the above-mentioned features for processing the electronic measurement data.

According to another exemplary embodiment, an X-ray analysis apparatus for analyzing a sample by X-ray irradiation is provided, wherein the X-ray analysis apparatus comprises an X-ray source for generating a beam of X-rays to be directed towards the sample, and an X-ray detector having the above-mentioned features for detecting the X-rays after interaction with the sample.

According to yet another exemplary embodiment, a method of processing electronic measurement data measured by an X-ray detector array being configured for detecting X-rays and having a plurality of detector pixels generating the electronic measurement data in response to X-rays propagating onto the detector array is provided, wherein the method comprises receiving the electronic measurement data from the detector pixels as analog signals, manipulating the analog signals in accordance with an adjustable analog gain value, and processing the electronic measurement data after the manipulation.

According to still another exemplary embodiment of the present invention, a software program or product is provided, preferably stored on a data carrier, for controlling or executing the method having the above mentioned features, when run on a data processing system such as a computer.

Embodiments of the invention can be partly or entirely embodied or supported by one or more suitable software programs, which can be stored on or otherwise provided by any kind of data carrier, and which might be executed in or by any suitable data processing unit. Software programs or routines can be preferably applied in the context of X-ray data analysis. The X-ray data analysis scheme according to an embodiment of the invention can be performed or assisted by a computer program, i.e. by software, or by using one or more special electronic optimization circuits, i.e. in hardware, or in hybrid form, i.e. by means of software components and hardware components.

In the context of this application, the term "analog signal" may particularly denote any continuous electric signal, i.e. any electric signal which may assume any gradually varying value. It differs from a digital signal in terms of small fluctuations in the signal which are meaningful.

In the context of this application, the term "digital signal" may particularly denote an electric signal that is a representation of a sequence of discrete values, for example of a digitized (sampled and analog-to-digital converted) analog signal.

In the context of this application, the term "adjustable gain value" may particularly denote a factor by which the electronic measurement signals are multiplied in the analog domain to thereby alter or manipulate it. The gain value is not set to a fixed value but in contrast to this can be set to any desired or appropriate value by a user or a processor in accordance with the requirements of a certain application or experiment.

According to an exemplary embodiment, data from an X-ray diffraction or scattering experiment for analyzing a sample, which data is detected by a for instance two-dimensional matrix-like array of detector pixels, can be processed directly after generation of electric analog signals so that the image constituted by the measurement data has better contrast or yields more meaningful result. This improvement of image quality (wherein a two-dimensional image can be constituted by local intensity maxima embedded in a dark background) is achieved by allowing a flexible adjustment of the measurement signals already in the analog signal domain, i.e. before transferring the analog signals to the digital domain for further processing. In other words, by enabling a free choice of a gain factor by which the analog signals are multiplied prior to digital conversion, an additional degree of freedom is implemented in the signal processing architecture. The selectability of the analog gain factor has the advantage that the positive or negative signal amplification can be tuned gradually or continuously, i.e. not only in a stepwise or discrete manner. This stepless gain selection in the analog domain is not possible in the digital domain in view of the discrete character of digital signals. Therefore, the free adjustability of the analog gain factor significantly refines signal processing which results in significantly improved image quality. Particularly, the signal-to-noise ratio may be significantly improved by adding the freedom to adjust the signals already in the analog domain, i.e. at an early stage of the signal processing path at which the signal is still free of artifacts added during the electronic processing both in the analog as well as in the digital domain. Allowing to select gain values, particularly in combination with noise filtering algorithms, allows strong signals to be measured without saturation and weaker signals to be measured with improved signal-to-noise ratio. This is particularly useful for X-ray diffraction applications producing weak data. Furthermore, by using signal-to-noise ratio as a parameter or criterion to decide on the duration of an X-ray experiment, faster data collection from weakly diffracting samples may be made possible.

Next, further exemplary embodiments of the electronic circuit will be explained. However, these embodiments also apply to the X-ray detector, the X-ray analysis apparatus, the method, and the software program or product.

In an embodiment, the analog gain adjustment unit has an analog gain value input interface configured for receiving the adjustable analog gain value (or more precisely a control signal indicative of the selected analog gain value) from a communicatively coupled entity (such as a processor of another device or a user operating a communicatively coupled communication device or processor). Therefore, the system may have a separate external interface via which the desired analog gain value may be input from an external entity.

In an embodiment, the analog gain adjustment unit has a user interface configured for receiving the adjustable analog gain value which has been input by a user. Such a user interface allows a human user to input (for instance to type in) the desired chosen analog gain value. A user therefore gets the opportunity to actively interfere into the signal processing rather than simply being confronted with a non-influenceable result. By enabling a user to contribute her or his human skills in the selection of an appropriate analog gain value, the value of the measurement result may be improved and signal artifacts may be suppressed.

In an embodiment, the analog gain adjustment unit is configured for manipulating the analog signals in accordance with an adjustable analog gain value damping the analog signals, i.e. reducing the amplitude of the analog signals. An analog gain value (which is particularly a multiplication factor) damping the analog signals is smaller than one. Thus, in a scenario in which an analog signal appears to be too large to obtain meaningful results, the quality of an image may be improved by damping the signals.

In an embodiment, the analog gain adjustment unit is configured for manipulating the analog signals in accordance with an adjustable analog gain value enhancing the analog signals, i.e. increasing the amplitude of the analog signals. An analog gain value enhancing an analog signal is larger than one. This can be particularly appropriate in a situation in which the signals are very weak although having a relative small noise, because then a simple magnification of the signals in the analog domain may broaden the information perceivable or derivable from the resulting image.

In still another embodiment, the value of the analog gain value may also be set to one, i.e. the signal manipulation may be deactivated by a user for a certain experiment or set of measurement data.

In an embodiment, the analog gain adjustment unit is configured for manipulating the analog signals in accordance with an analog gain value which is adjustable by selection only from a limited number of predefined selectable analog gain values. Not only the analog gain value may be selected in this case, but it is also possible to chose from a whole set of signal processing parameters defining a complete electronic gain setting (for instance, such an electronic gain setting may also include data indicative of one or more digital gain parameters which may match to the corresponding analog gain value). To make the system feasible also for less skilled or less experienced users, the system may provide a number of appropriate gain settings among which a user may then freely select a desired gain setting. Thus, a user can be prevented from making inappropriate choices so that the user can be guided through the complex system of adjusting gain parameters. Therefore, the system is less prone to failure because a user is only allowed to choose from a number of reasonable gain settings. In one embodiment, only a selection among gain values of 0.5, 1, 2 and 4 is possible.

In an embodiment, the analog gain adjustment unit is configured for manipulating the analog signals in accordance with an analog gain value which is adjustable only within a predefined, given range. For instance, this range may be from 0.5 to 4. Also by limiting the range of allowed analog gain values, the system may be less prone to failure because a user is prevented from inputting unreasonable analog gain values which will not yield meaningful results.

In an embodiment, the analog gain adjustment unit allows to adjust an analog gain value for a certain X-ray photon energy. For different X-ray photon energies, different analog gain values may be adjusted.

In an embodiment, the electronic circuit comprises an analog-to-digital converter configured for converting the manipulated analog signals into digital signals. Therefore, the analog signals may be converted into digital signals after being multiplied with the adjustable gain value. An analog-to-digital converter is a device that uses for instance sampling to convert a continuous quantity in analog form to a discrete representation in digital form.

In an embodiment, the electronic circuit comprises a digital gain unit configured for manipulating the digital signals in accordance with a digital gain value (particularly configured for multiplying the digital signals with a factor which is called the digital gain value). Thus, an additional signal amplitude manipulation is possible in the digital domain. For instance, by having used a certain analog gain value to improve the signal-to-noise ratio, it may be advantageous to normalize or again adjust the signal amplitude in the digital domain. For instance, the digital gain value may at least partially compensate for the manipulation of the signal in the analog domain by multiplying it with the adjustable digital gain value. By the digital gain unit, the signal may be rendered compatible with other requirements, for instance a certain range of digital signal values which can be further processed by a connected other device. The digital gain value may be determined based on the previously applied and selected analog gain value.

In an embodiment, the electronic circuit comprises a digital gain adjustment unit configured for manipulating the digital signals in accordance with an adjustable digital gain value. In the context of this application, the term "adjustable digital gain value" may particularly denote a factor by which the digitized electronic measurement signals are multiplied in the digital domain to thereby alter or manipulate it. The digital gain value is not set to a fixed value but in contrast to this can be set to any desired or appropriate value by a user or a processor in accordance with the requirements of a certain application or experiment. By allowing a user or another device by also adjusting the digital gain value in the digital domain, the flexibility of the system is further increased. A separate adjustability in the analog and the digital domain gives a user or device a high freedom of manipulating the measurement data to obtain a very good signal-to-noise ratio or contrast.

In an embodiment, the processor is configured for processing the digital signals. In other words, the further signal processing may be performed after analog-to-digital conversion.

In an embodiment, the processor is configured for suppressing noise in the digital signals, particularly based on an image recognition procedure. Noise suppressing algorithms may be applied to the manipulated signals in the digital domain. It is also possible that a baseline correction is performed so that signals having a value smaller than a predefined threshold value may be set to zero as being considered to represent only noise.

In an embodiment, the detector array comprises a matrix-like two-dimensional array of detector pixels arranged in rows and columns. The detector array may be a Charge Coupled Device (CCD) detector array or a Complementary Metal Oxide Semiconductor (CMOS) detector array. The variable gain adjustment architecture according to an embodiment of the invention is compatible both with CCD and CMOS technology.

In a CCD image sensor, pixels may be represented by doped MOS (metal oxide semiconductor) capacitors which can be biased above a threshold for inversion when image acquisition begins, allowing the conversion of incoming photons into electron charges at a semiconductor oxide interface. The CCD is capable to read out these charges to thereby derive the electronic measurement data in analog form.

A CMOS detector is an image sensor comprising an integrated circuit containing an array of pixel sensors, each pixel containing a photodetector and an active amplifier. Such an image sensor may be produced by a CMOS process.

In an embodiment, the X-ray detector comprises a scintillator covering the detector pixels of the detector array. As an alternative to a scintillator, any other X-ray-to-optical conversion structure may be located upstream of the detector pixels for converting the X-rays to be detected into lower energy photons, such as optical photons or photons in the ultraviolet wavelength range. A scintillator may be considered as a solid body which can convert X-rays into a number of less energetic photons, wherein this number is indicative of the energy of the photon. Therefore, a scintillator can be considered as an amplifier in the optical domain which is arranged upstream of the analog signal processor.

In an embodiment, the X-ray detector comprises a fiber-optic taper between the scintillator and the detector array. Such a fibre optic taper may be considered as a plurality of waveguides arranged between the scintillator and the detector array and allowing to guide the photons generated in the scintillator towards a respective detector pixel. By the tapering arrangement of this fibre optic, it is possible to provide an interface between the physically larger scintillator and the physically smaller X-ray detector pixel array, thereby focusing the photons onto the detector pixels.

In an embodiment, the X-ray source comprises an X-ray tube generating X-rays, an X-ray optic for collecting and focussing X-rays generated in the X-ray tube, and an X-ray beam conditioner for conditioning the X-rays after collecting and focussing them by the X-ray optic. The X-ray source may comprise an electron beam emitter for emitting an electron beam which is then accelerated by an applied high voltage towards an anode. When hitting the anode, the electron beam generates X-rays which can then be focused by the X-ray optics (such as mirrors). The so collected and focused X-rays may then be input to an X-ray beam conditioner such as a collimator for further beam shaping. The X-ray beam leaving the collimator may then propagate to a sample at which the X-rays are scattered. The detector may be arranged downstream of the sample and may detect a two-dimensional image of signals and dark regions.

In an embodiment, the X-ray analysis apparatus is configured as X-ray diffractometer. X-ray scattering delivers information about the crystal structure, chemical composition, and physical properties of crystals, powder and thin films and is based on observing the scattered intensity of an X-ray beam hitting a sample as a function of incident and scattered angle, polarization, and wavelength or energy. Particularly in X-ray diffractometry, a proper signal-to-noise ratio is important because in many cases corresponding applications suffers from small signals (see for instance protein crystallography). Thus, a proper signal evaluation and noise suppression as well as adjustable gain management is of upmost advantage in such a technology.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 illustrates an X-ray detector array and a coupled electronic circuit for processing electronic measurement data according to an exemplary embodiment of the invention.

Fig. 2 illustrates an X-ray diffractometer according to an exemplary embodiment of the invention.

Fig. 3 illustrates an X-ray detector and a connected electronic circuit according to an exemplary embodiment of the invention.

Fig. 4 is an explosive view of the arrangement of Fig. 3.

Fig. 5 is a block diagram of an electronic circuit together with an X-ray detector array according to an exemplary embodiment of the invention.

Fig. 6 is a block diagram illustrating an analog channel of the electronic circuit of Fig. 5.

In the following, some considerations of the present inventor with regard to the evaluation of measurement signals of X-ray detectors will be explained, based on which exemplary embodiments of the invention have been developed.

Conventional signal processing electronics of X-ray detectors have fixed analog gain (for a certain X-ray photon energy). For strong X-ray signals the result can be saturation of the detector (the electronics have a dynamic range which results in a maximum possible value of ADU per pixel; ADU means analog-to-digital unit, i.e. a number representing a pixel detector's, for instance CCD's, output. The relationship between the ADUs generated and the number of electrons acquired on the pixel detector is defined by the electronic gain. Intensities given in ADUs provide a method for comparing images). For weak X-ray signals the results can be low signal-to-noise ratio where the signal is difficult to distinguish from the detector's noise sources (which are electronic readout noise and dark current from the imager, i.e. resulting from self generated electrons).

In contrast to this, exemplary embodiments of the invention relate to the construction of an X-ray detector with variable electronic gain which will improve its capability to measure weak and also strong signals. Correspondingly, it is possible to perform a number of tunable (or switchable) electronic gain settings (wherein the values may result from the actual electronic circuit design). A value lower than the present one will suppress the ADU values and thus significantly reduce image noise while keeping strong signals within the dynamic range of the detector (i.e. strong signals not out of range and not saturating the readout electronics). A value higher than the present one will enhance the ADU values and thus increase weak signals, amplifying both image noise and data signals to facilitate image filtering by software or firmware algorithms, resulting in improved signal to noise ratio.

Hence, an X-ray detector according to an exemplary embodiment of the invention may allow stronger signals to be measured without saturation and also weaker signals to be measured with improved signal to noise ratio, by the selection of one of the gain settings and use of noise filtering algorithms. This selection may be made through software and firmware and can thus be controlled to make an optimum experiment with a present sample. The improved signal to noise ratio for weak signals will be particularly useful for X-ray diffraction applications which produce weak data, such as satellite scattering, harmonics and diffuse diffraction (for example from disordered samples). When signal to noise ratio is used as the parameter to decide on experiment duration, this will permit faster data collection from weakly diffracting samples. Variable electronic gain advantageously equates to variable total gain for the detector.

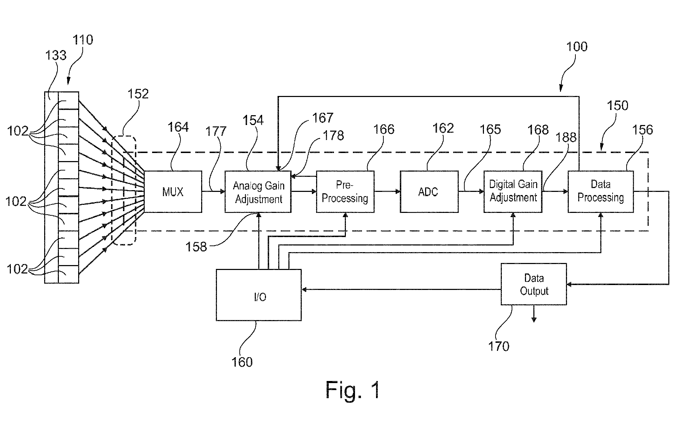

In the following, referring to **Fig. 1**, an X-ray detector 100 for detecting X-rays according to an exemplary embodiment of the invention will be explained.

The X-ray detector 100 comprises a CCD detector array 110 having a plurality of detector pixels 102 which are arranged in a two-dimensional matrix with rows and columns. A conversion structure 133 (such as a scintillator) is located between the impinging X-rays to be detected (not shown, but propagating to the conversion structure 133 from a left hand side according to Fig. 1) and the detector pixels 102. The conversion structure 133 converts the incident X-rays into optical photons which are then detected by the detector pixels 102. Each of the detector pixels 102 is configured for detecting the optical photons directly - and therefore the X-rays indirectly - by generating electronic measurement data as electronic signals such as a certain number of charge carriers such as electrons. More precisely, the X-rays propagating to the X-ray detector array 110 can first be converted into optical photons by the conversion structure 133 before the optical photons are then converted by a semiconductor component of the detector pixels 102 into an analog electronic signal, i.e. a current or voltage.

Downstream of the detector array 110 is an electronic circuit 150 which can be configured as an integrated circuit or conventionally wired and which is adapted for processing the electronic measurement data delivered by the detector pixels 102 of the detector array 110.

The electronic circuit 150 is configured for processing the electronic measurement data supplied by the detector pixels 102 and receives this electronic data in an analog format at a measurement data receiving interface 152. In other words, the measurement data receiving interface 152 is electrically coupled to an output of the detector pixels 102 and receives the electronic measurement data from the detector pixels 102 as analog signals.

These analog signals may then be pre-processed in an optional multiplexer (MUX) 164. The multiplexer 164 selects one of the several analog input signals from the detector pixels 102 and forwards the selected input signal into a single line so that they are supplied sequentially as multiplexed signals 177 to an input of an analog gain adjustment unit 154. As an alternative to the sequential signal processing architecture of Fig. 1, also a partially or complete parallel processing is possible.

The analog gain adjustment unit 154 is configured for manipulating the supplied analog signals in accordance with an adjustable, variable, selectable analog gain value. In the shown embodiment, a user interface 158 is provided at the analog gain adjustment unit 154 which can receive a user-defined or user-selected analog gain adjustment value which a user can input via an input/output unit 160. The input/output unit 160 may comprise input elements such as buttons, a keypad, a mouse or a joystick via which the desired analog gain adjustment value can be sent as a control command to the analog gain adjustment unit 154. The respective analog signal will then be multiplied by the selected analog gain adjustment value in the analog gain adjustment unit 154. Furthermore, one or more additional data communication interfaces 167, 178 may be provided at the analog gain adjustment unit 154 via which an electronic unit such as a data processor 156 or a pre-processor 166 can send an analog gain value to the analog gain adjustment unit 154.

In one embodiment, the analog gain adjustment unit 154 allows a coupled entity 160, 166, 156 to select any gain value smaller than 1 (which results in a damping or amplitude reduction of the analog signals) and/or larger than 1 (which results in an enhancing or amplitude increase of the analog signals) and/or 1 (which results in no manipulation of the analog signals at all). In another embodiment, only a defined or limited number of allowed gain settings is offered by the analog gain adjustment unit, for instance gain values of 0.5, 1, 2 or 4 can be selected. In still another embodiment, the analog gain adjustment unit 154 allows to freely adjust the gain value only within a given range, for instance between 0.1 and 5.

The analog gain adjustment unit 154 then multiplies the analog signal amplitudes received as the multiplexed signals 177 with the adjusted analog gain value and provides the output to a pre-processing unit 166. The pre-processing unit 166 is configured for pre-processing the measurement signals multiplied with the adjusted analog gain value before transferring them into the digital domain. Also the pre-processing unit 166 may receive control commands from a user via the input/output unit 160.

After having passed the optional pre-processing unit 166, the pre-processed analog signals may be supplied to an analog-to-digital converter (ADC) 162 which converts the up- or down-scaled and pre-processed analog signals into the digital domain. The resulting digital signals are denoted with reference numeral 165.

The latter can be supplied to an optional digital gain adjustment unit 168 which is configured for performing a multiplication of the digital signals 165 with any digital gain value larger than 1 or smaller than 1 or equal to 1. The digital gain value may or may not be adjustable by a coupled entity (such as the input/output unit 160).

Downstream of the digital gain adjustment unit 168, data processor 156 is located for processing the data in the digital domain. Particularly, the data processor 156 may be configured for applying a noise suppression algorithm to manipulated digital signals 188. In this context, image recognition procedures leading to enhancing the signal to noise ratio in the manipulated digital signals 188 may be applied. It is for instance also possible that a baseline correction is performed by the data processor 156 (alternatively this may be done in the pre-processor 166) by which for instance signals below a predefined threshold value may be set to zero, thereby suppressing noise.

The output of the data processor 156 can be supplied to a data output unit 170 via which the data can be either displayed to a user on the input/output unit 160 (which may include a display device such as a monitor) or can be supplied to another entity (not shown, see arrow) for further processing or use.

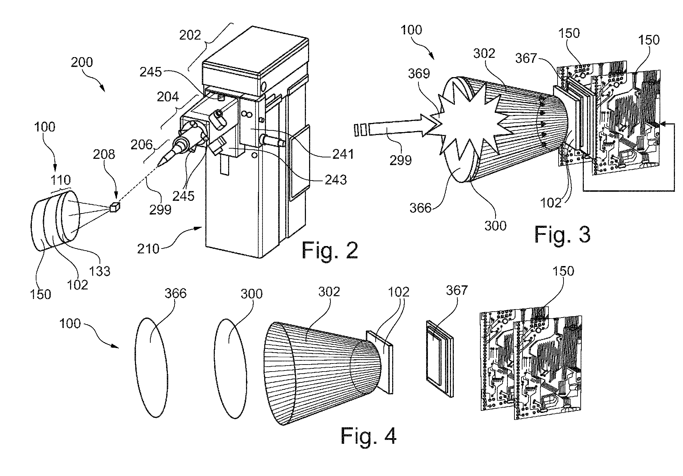

**Fig. 2** shows a three-dimensional view of an X-ray diffractometer 200 according to an exemplary embodiment of the invention.

The X-ray diffractometer 200 comprises an X-ray source which comprises an X-ray tube 202, for instance of the rotating anode type, within which an X-ray beam is generated by directing an electron beam onto an anode. Furthermore, an X-ray optic 204 is shown for collecting and focusing the X-ray beam generated in the X-ray tube 202 and being attached to the X-ray tube 202. Beyond this, an X-ray conditioner 206 or collimator is provided for conditioning the X-ray beam after collecting and focusing it by the X-ray optic 204.

A safety shutter 241 and a fast shutter 243 are shown as well. Furthermore, adjustment screws 245 are shown by which the X-ray optic 204 can be adjusted relative to the X-ray tube 202, and the X-ray beam conditioner 206 can be adjusted relative to the X-ray optic 204. Particularly, adjustable mirrors (not shown) of the X-ray optic 204 may be aligned by actuating the adjustment screws 245.

The X-ray beam 299 exiting the X-ray beam conditioner 206 can then be directed towards a protein crystal 208 or any other crystalline or powdery sample at which X-ray scattering takes place. The scattered X-rays are then directed towards the X-ray detector 100 having the detector array 110 and the electronic circuit 150.

**Fig. 3** shows a three-dimensional view of the X-ray detector 100. The X-rays 299 propagate through a beryllium window 366 of the X-ray detector 100 before being converted into optical photons by a scintillator 300. Downstream of the scintillator 300, a fibre optic taper 302, i.e. a tapering arrangement of a plurality of optical fibers as waveguides, is provided which focuses the optic photons onto the CCD detector pixels 102. The detector pixels 102 generate analog electronic signals indicative of the optical signals being, in turn, indicative of the X-rays 299. These analog signals will be supplied to and processed by the electronic circuit 150, as has been described above referring to Fig. 1. A Peltier cooler 367 for cooling the CCD detector pixels 102 is shown as well in Fig. 3 and is arranged between the detector array and the electronic circuit 150.

**Fig. 4** shows an explosive view of the components shown in Fig. 3.

The detector 100 shown in Fig. 3 and Fig. 4 can be used on X-ray diffractometers. The detectors 100 has a vacuum chamber at the front and electronics package at the back. The vacuum is advantageous when the imager (in the shown embodiment the CCD detector pixels 102) is cooled, in order to avoid water condensation. The vacuum chamber is sealed on the front face with the beryllium window 366 since this has a good transparency for the X-rays 299. Inside the chamber an X-ray photon generates green light photons (schematically shown with reference numeral 369) on the scintillator 300, which are focused through a block a fibre-optics, i.e. fibre optic taper 302, onto the imager device, i.e. the CCD detector pixels 102. The fibre-optic taper 302 can be constructed with or without a zoom ratio. Without zoom it makes a 1:1 image transfer from the front end to the imager end. With a zoom it makes an image reduction (when the front end is larger than the imager) of for example 1:1.3, 1:2 or 1:2.5 ratio. The green photons 369 generate electrons in the detector pixels 102 of the imager and these electrons are accumulated in the detector pixels 102 for the duration of the X-ray exposure. At the end of the exposure the electronics 150 reads out the electrons from the detector pixels 102, converts this into a voltage signal and then digitizes it into a value which is stored by software as a 2D image file. The amplification or gain of the detector 100 is separated into two components: optical and electronic. The optical gain refers to the number of electrons which are created in the imager for one X-ray photon entering the detector 100. This depends upon the amplification at the scintillator 300 (number of green photons 369 per one X-ray photon), the transmission losses between scintillator 300 and imager and the sensitivity of the imager. The detector 100 can be used with X-ray photons of various characteristic energies (such as Molybdenum K-alpha or Copper K-alpha) which each interact with the scintillator 300 in a different way and thus give rise to different optical gain values. The electronic gain describes the ratio between the analog-to-digital unit (ADU) in the image data and the number of electrons read out from the imager. This depends upon the construction of the electronics 150 and is independent of X-ray photon energy.

The X-ray detector 100 has front end conversion from X-rays 299 to green light photons 369 (which corresponds to a certain optical gain). The rear end conversion to an electronic signal has various settings. In an embodiment, variable electronic gain settings are x0.5, x1, x2 and x4. In ADU/electron terms this would mean: 0.24, 0.48, 0.96 and 1.92. The variable electronic gain setting may be achieved through the design of electronics, firmware and/or software.

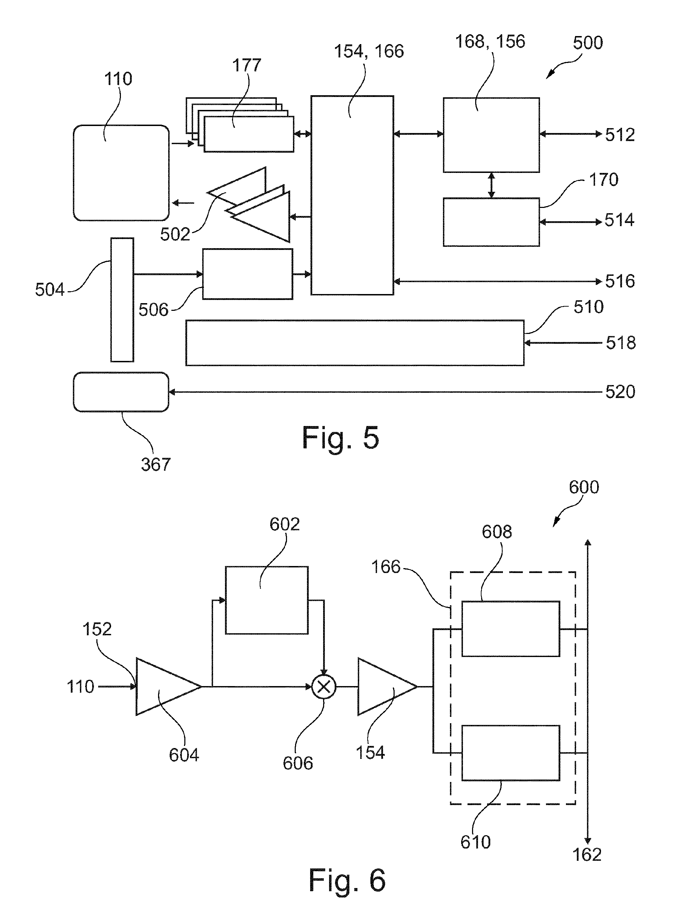

**Fig. 5** shows a block diagram 500 of an X-ray detector according to an exemplary embodiment of the invention.

Electronic signals are delivered from X-ray detector array 110 into - in the shown embodiment four - analog channels 177. A first electronic chip is provided which fulfils the functions of entities 154, 166 of Fig. 1. Via an interface, first electronic chip 154, 166 communicates with a second electronic chip which relates to entities 168, 156 of Fig. 1. A third electronic chip 170 contributes to the data processing as well. The second electronic chip 168, 156 communicates via a CAN (controller area network) bus 512. The third electronic chip 170 has an Ethernet connection 514. A bidirectional trigger communication is enabled with the first electronic chip 154, 166. Furthermore, a power distribution unit 510 is provided which can be supplied with power (for instance 12V DC, 2A), see reference numeral 518. Peltier cooler 367 can be supplied with power by a Peltier cooler power supply 520.

A temperature sensor 504 performs temperature measurement in four points which can be evaluated in a block 506. Furthermore, a clock unit 502 is provided.

**Fig. 6** shows a block diagram 600 of the analog channel of an electronic circuit according to an embodiment of the invention.

The detector array 110 is coupled via interface 152 to an AC coupled preamplifier 604. After having passed the signal through an offset remover 602 and a signal combiner 606, it is applied to variable gain amplifier 154. Processor 166 is here constituted by a reference signal measurement unit 608 and a video signal measurement unit 610. The correspondingly processed signals are then supplied to a digital interface, see reference numeral 162.

It should be noted that the term "comprising" does not exclude other elements or features and the "a" or "an" does not exclude a plurality. Also elements described in association with different embodiments may be combined. It should also be noted that reference signs in the claims shall not be construed as limiting the scope of the claims.

## Claims

1. An electronic circuit (150) for processing electronic measurement data measured by an X-ray detector array (110) being configured for detecting X-rays and having a plurality of detector pixels (102) generating the electronic measurement data in response to X-rays propagating onto the detector array (110), the electronic circuit (150) comprising:
a measurement data receiving interface (152) configured for receiving the electronic measurement data from the detector pixels (102) as analog signals;
an analog gain adjustment unit (154) configured for manipulating the analog signals in accordance with an adjustable analog gain value;
a processor (156, 166) for processing the electronic measurement data after the manipulation.

2. The electronic circuit (150) according to claim 1, wherein the analog gain adjustment unit (154) has an analog gain value input interface (158, 167, 178) configured for receiving the adjustable analog gain value from a communicatively coupled entity (160, 156, 166).

3. The electronic circuit (150) according to claim 1 or 2, wherein the analog gain adjustment unit (154) has a user interface (158) configured for receiving the adjustable analog gain value input by a user, particularly via an input unit (160).

4. The electronic circuit (150) according to any of claims 1 to 3, comprising at least one of the following features:
the analog gain adjustment unit (154) is configured for manipulating the analog signals in accordance with an adjustable analog gain value damping the analog signals;
the analog gain adjustment unit (154) is configured for manipulating the analog signals in accordance with an adjustable analog gain value enhancing the analog signals.

5. The electronic circuit (150) according to any of claims 1 to 4, wherein the analog gain adjustment unit (154) is configured for manipulating the analog signals in accordance with an analog gain value which is adjustable by selection from a number of predefined selectable analog gain values.

6. The electronic circuit (150) according to any of claims 1 to 5, wherein the analog gain adjustment unit (154) is configured for manipulating the analog signals in accordance with an analog gain value which is adjustable within a given range, particularly within a range from 0.5 to 4.

7. The electronic circuit (150) according to any of claims 1 to 6, comprising an analog-to-digital converter (162) configured for converting the manipulated analog signals into digital signals.

8. The electronic circuit (150) according to claim 7, comprising a digital gain unit (168) configured for manipulating the digital signals in accordance with a digital gain value.

9. The electronic circuit (150) according to claim 7, comprising a digital gain adjustment unit (168) configured for manipulating the digital signals in accordance with an adjustable digital gain value.

10. The electronic circuit (150) according to claims 7 to 9, wherein the processor (156) is configured for processing the digital signals.

11. The electronic circuit (150) according to claim 10, wherein the processor (156) is configured for suppressing noise in the digital signals, particularly based on an image recognition procedure, leading to enhanced signal-to-noise ratio in the digital signals.

12. An X-ray detector (100), comprising:
an X-ray detector array (110) configured for detecting X-rays and having a plurality of detector pixels (102) generating electronic measurement data as analog signals in response to X-rays propagating onto the detector array (110);
an electronic circuit (150) according to any of claims 1 to 11 for processing the electronic measurement data.

13. The X-ray detector (100) according to claim 12, wherein the detector array (110) comprises one of the group consisting of a Charge Coupled Device detector array and a Complementary Metal Oxide Semiconductor detector array.

14. A method of processing electronic measurement data measured by an X-ray detector array (110) being configured for detecting X-rays and having a plurality of detector pixels (102) generating the electronic measurement data in response to X-rays propagating onto the detector array (110), the method comprising:
receiving the electronic measurement data from the detector pixels (102) as analog signals;
manipulating the analog signals in accordance with an adjustable analog gain value;
processing the electronic measurement data after the manipulation.

15. A software program or product, preferably stored on a data carrier, for executing a method according to claim 14, when run on a data processing unit (154, 156, 166) such as a computer.
